# EUROPEAN PATENT SPECIFICATION

(11) **EP 1 769 988 B1**
(45) Date of publication and mention of the grant of the patent: **26.08.2015**
(21) Application number: 06121314.6
(22) Date of filing: 27.09.2006
(51) Int. Cl.: B60S 3/00

(54) **Vehicle-drying apparatus and method of drying vehicles**
Trockengerät für ein Fahrzeug und Verfahren zum Trocknen von Fahrzeugen
Appareil de séchage pour véhicule et procédé de séchage de véhicules

(30) Priority: 29.09.2005 FI 20055522
(43) Date of publication of application: 04.04.2007
(73) Proprietor: Tammermatic Oy, 33300 Tampere (FI)
(72) Inventor: Kohonen, Ari, 33300 Tampere (FI)
(74) Representative: Kolster Oy Ab

(56) References cited:
- EP-A- 1 147 957
- EP-A- 1 627 788
- DE-A1- 4 431 102
- DE-U1- 8 528 550
- GB-A- 2 183 206

## Description

### BACKGROUND OF THE INVENTION

The invention relates to a vehicle-drying apparatus comprising a top nozzle device for drying the vehicle and lifting means for moving the top nozzle device.

The invention further relates to a method of drying vehicles, the method comprising drying the vehicle with a top nozzle device that is moved by means of a lifting means.

The drying of a vehicle in connection with an automatic vehicle-washing apparatus is quite challenging. Typically, a vehicle-drying apparatus comprises a top drying unit and side drying units arranged on each side of the vehicle. It is quite cumbersome to dry the vehicle with a single drying apparatus in a vehicle-washing line wherein the washing apparatuses are stationary and the vehicle being washed moves from one device to another. Drying the horizontal surfaces of the vehicle is particularly difficult, and consequently two top dryer units are typically placed in succession in the washing line. This being so, the washing apparatus becomes quite long and, because of its structure, quite expensive.

On the other hand, automatic vehicle-washing apparatuses are known wherein the vehicle is stationary and the devices move in a reciprocating manner over the vehicle. In such a washing apparatus, the vehicle can be dried with a single drying apparatus. However, to ensure a good drying result, the drying apparatus typically has to be moved over the vehicle more than one time during the drying, which diminishes the operating capacity of the device. A solution is also known wherein two drying apparatuses are arranged in such an apparatus. However, the structure of such a drying apparatus is quite complex and complicated, and consequently the manufacturing costs of the apparatus rise quite high.

EP-A-1627788 is a document relevant only for novelty pursuant Article 54 (3) EPC and discloses a drying method and a drying apparatus for car washing apparatuses. The apparatus comprises a drying nozzle comprising two crossing nozzle boxes.

Document DE 8 528 550U U1 discloses a vehicle-drying apparatus and a method for drying vehicles according to the preamble of claims 1 and 5.

### BRIEF DESCRIPTION OF THE INVENTION

The object of this invention is to provide a new type of drying apparatus and a method of drying vehicles.

The drying apparatus of the invention is characterized by the feature of claim 1.

The method of the invention is characterized by the features of claim 5.

The idea of the invention is that the vehicle-drying apparatus comprises at least two top nozzle devices in succession in the travel direction of the vehicle. The top nozzle devices constitute a single unit in such a manner that there is only one set of moving means per two top nozzle devices. Thereby the structure of the drying apparatus becomes fairly simple. The structure of the vehicle-washing line can also be made shorter. On the whole, the costs can be lowered.

According to an embodiment, the successive top nozzle devices are arranged at a distance of less than 500 mm from each other. This being so, the structure of the drying apparatus is short and compact. Furthermore, vertical and sloping surfaces can be dried extremely efficiently.

The idea of another embodiment is to turn the blowing direction of the top nozzles in the longitudinal direction of the vehicle during the drying. This enables an enhancement of the drying of vertical and sloping surface in particular.

### BRIEF DESCRIPTION OF THE FIGURES

Some embodiments of the invention will be described in more detail in the accompanying drawings, wherein
Figure 1 schematically shows the washing steps of an automatic vehicle-washing apparatus,
Figure 2 schematically shows a vehicle-drying apparatus seen from the approach direction of the vehicle,
Figure 3 shows a top view of the drying apparatus according to Figure 2,
Figure 4 schematically shows the adjustment of the blowing direction of the drying apparatus,
Figure 5 schematically shows a detail of a rotational connection in cross-section,
Figure 6 schematically shows a side view of the nozzle of an overhead air distribution device in cross-section, and
Figure 7 schematically shows a side view of the nozzle of a side air distribution device in cross-section.

In the figures, the invention is shown in a simplified manner for the sake of clarity. In the figures, like parts are denoted with like reference numerals.

### DETAILED DESCRIPTION OF SOME EMBODIMENTS OF THE INVENTION

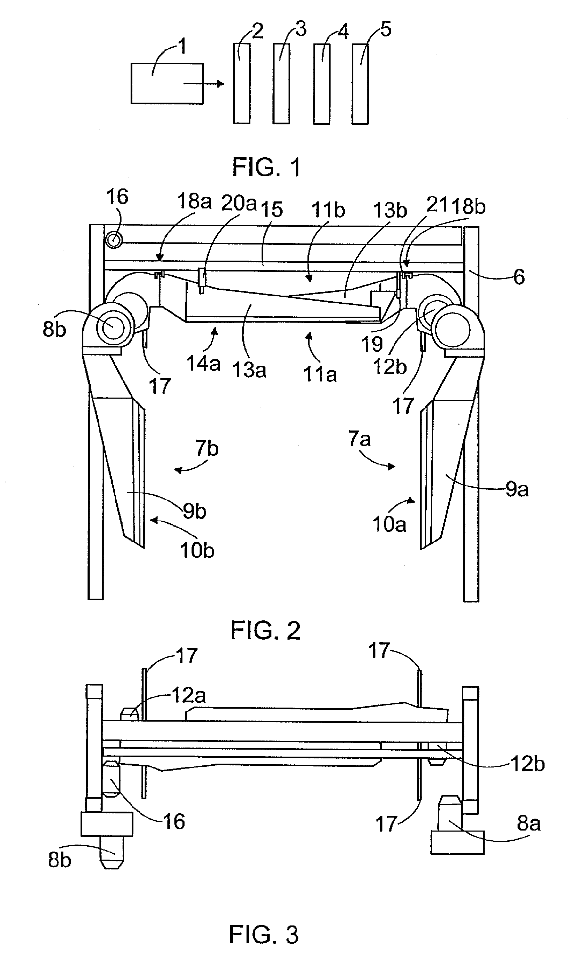

Figure 1 shows a diagram of how a vehicle is washed in an automatic vehicle-washing apparatus. Reference numeral 1 denotes the vehicle being washed. The vehicle may be e.g. a private car, a van, a bus, a train, a tram, a lorry, a truck or another corresponding washable vehicle. The first washing step is pre-wash 2, wherein the vehicle is wetted and prepared for washing step 3. In the pre-wash step 2, a soil-dissolving pre-wash detergent can be used, for example. In the washing step 3, the vehicle is washed by the use of high-pressure jets or rotating brushes or both, for example. After the washing step 3, the next step is waxing 4. Typically, hot wax is sprayed onto the vehicle in this step. Finally, the vehicle is dried in drying step 5. All the above-described washing steps are not necessary and, on the other hand, washing steps other than the above may be included, if need be.

The washing steps are implementable for instance in a vehicle-washing line wherein the vehicle 1 moves in the direction indicated by the arrow shown in Figure 1, while the washing apparatuses remain stationary. A washing line typically comprises separate stationary devices for implementing each washing step, the devices being fastened to support structures. An automatic vehicle-washing apparatus may also be implemented by incorporating all devices for carrying out the different washing steps into one, typically portal-shaped frame, which is moved in a reciprocating manner in the longitudinal direction of the vehicle, while the vehicle remains stationary.

Figure 2 shows a vehicle-drying apparatus seen from the approach direction of the vehicle, and Figure 3 shows a top view of said apparatus. The vehicle-drying apparatus comprises a portal-shaped frame 6. Side nozzle devices 7a and 7b are fastened to the frame 6 and they are used to blow air for drying the sides of the vehicle 1. The side nozzle device 7a and 7b comprise blowers 8a and 8b for blowing air into side air distribution devices 9a and 9b. The front ends of the side air distribution devices 9a and 9b, i.e. the ends facing the blowers, are broader and taper towards the end, whereby air can be blown evenly out through side nozzles 10a and 10b.

The drying apparatus comprises two top nozzle devices 11 a and 11 b for drying the other parts of the vehicle 1, such as the roof, the windshield, the front part and the rear part. Similarly, blowers 12a and 12b for blowing air into an air distribution device 13a and 13b are arranged in connection with both top nozzle devices 11a and 11b. As in the case of the blowers 12a and 12b, the front ends of the air distribution devices 13a and 13b are also broader and taper towards the end to achieve an even air distribution.

The top nozzle devices 11 a and 11 b further comprise top nozzles 14a and 14b, through which drying air is blown towards the vehicle 1. The top nozzle devices 11a and 11b are fastened to a roof rail 15. The roof rail 15 constitutes part of the frame 6. The roof rail 15 is movable in the up and down directions with a lifting means 16. The lifting means 16 may comprise an electric motor, for example, which produces power for moving the roof rail 15 and slide rails, for example, along which the roof rail 15 moves, and chains or other power transmission means for transferring engine power for moving the roof rail 15. When the roof rail 15 moves, the top nozzle devices 11a and 11b, fastened thereto, naturally move therewith. The lifting means 16 are not discussed in detail in this context, since their operation and structure are evident to a person skilled in the art.

In connection with the top nozzle devices 11 a are arranged sensors 17 that generate data for guiding the top nozzle devices 11a and 11b to travel close to the surface of the vehicle 1 to achieve an as good a drying result as possible, but, however, in such a manner that the top nozzle devices 11a and 11b do not touch the vehicle 1 and damage the surface thereof. The sensors 17 may be photoelectric cells, for example, or some other corresponding sensors. The vehicle-washing apparatus further comprises a control device that, together with information supplied by the sensors 17, controls the top nozzle devices 11a and 11b to move to the right spot. The sensors 17 and the control of the top nozzle devices 11a and 11b are known to a person skilled in the art, and will not be dealt with in any greater detail in this context.

Accordingly, both top nozzle devices 11 a and 11 b are arranged in the roof rail 15. Only one lifting device 16 is therefore required for moving both top nozzle devices 11a and 11b. The distance between the top nozzle devices 11a and 11b should be relatively short. This being so, both top nozzle devices 11a and 11b are able to effectively dry also the sloping surfaces of the vehicle 1, such as the windshield, and the vertical surfaces, such as the front and rear parts. Preferably, the distance between the midpoints of the top nozzles 14a and 14b of the top nozzle devices 11 a and 11 b is less than 800 mm. Most preferably, the distance between the midpoints of the top nozzles 14a and 14b is less than 500 mm.

The air distribution devices 13a and 13b are connected to the blowers 12a and 12b with rotational connections 18a and 18b, respectively. Furthermore, the tails of the top nozzle devices 11a and 11b are connected to the roof rail 15 by connecting a peg projecting from the tail of the top nozzle device to a bar leading to the roof rail with a bearing 19. Consequently, thanks to the rotational connection 18 and the bearing 19, the blowing direction of the air distribution devices 13a and 13b is turnable with turning cylinders 20a and 20b in the longitudinal direction of the vehicle 1. Instead of the turning cylinders 20a and 20b, another turning means solution may also be used to turn the blowing direction of the air distribution devices 13a and 13b.

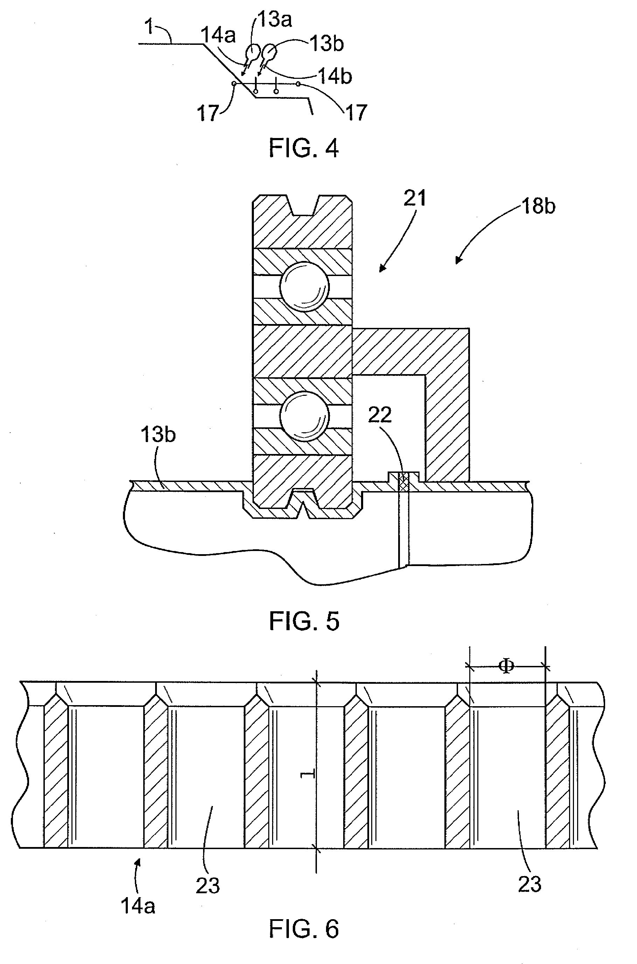

When the vehicle 1 is being dried on its vertical and sloping surfaces, for example, it is preferable to turn the blowing direction of the air distribution devices 13a and 13b. Figure 4 illustrates such turning of the blowing direction. The sensors 17 detect that the air distribution devices 13a and 13b are in the vicinity of the windshield, for example, or another vertical or sloping surface. This being so, the top nozzles 14a and 14b are turned to blow the drying air in accordance with the arrows shown in Figure 4. The air distribution devices 13a and 13b may be controlled to turn simultaneously in the same direction. When required, the turning of the air distribution devices 13a and 13b can also be separately controlled irrespective of each other.

Figure 5 shows a detail of the rotational connection 18b. At the rotational connection 18b, the cross-section of the air distribution device 13b is round, allowing it to rotate along a circle defined by stationary grooved pulleys 21. The grooved pulleys 21 are fastened stationary to the frame part facing the stationary blower 12b. Since the blower 12b does not turn along with the air distribution device 13b, the air distribution device 13b is quite lightweight, whereby it can be easily rotated without strong forces. The outer surface of the air distribution device 13b is provided with a groove into which the grooved pulley 21 settles. The middle of the grooved pulley 21 is provided with a groove, the wall of the air distribution device 13a is provided with a wedge that settles in the groove of the grooved pulley 21, and both sides of the wedge are provided with grooves that follow the shape of the grooved pulley 21. The air distribution device 13b can thus be made to rotate extremely steadily, supported by the grooved pulleys 21. A seal 22 that allows the air distribution device 13b to glide relative to the stationary part can be arranged between the rotary air distribution device 13b and the stationary part. The seal 22 can be fastened either to the rotary air distribution device 13b or to the stationary part, or seals can be arranged in both of them. In the latter case, a gliding surface is provided between the seals. The air distribution devices 13a and 13b can be arranged to rotate ± 90°, for example.

Figure 6 shows a side view of the structure of the top nozzle 14a in cross-section. The structure of the top nozzle 14b is similar. The top nozzle 14a comprises a plurality of adjacent elongated openings 23 or channels. The definition elongated means that the length l of the opening 23 is long enough to allow the airflow flowing through the opening 23 to be stabilized by the action of the opening 23, i.e. the opening 23 is tubular. Furthermore, the diameter Ø of the opening 23 is smaller than the length l of the opening 23. The length l of the opening 23 is preferably more than 30 mm. Extremely good results have been achieved with nozzles whose opening has a length of about 40 mm and a diameter Ø of about 18 mm. The diameter of the opening 23 may vary between 10 and 50 mm, for example. In the transverse direction of the vehicle 1 there are typically at least 10 openings 23 per metre. Preferably, there are more than 40 openings having a diameter of 18 mm when the effect of the blower 12a is 4 kW. Most preferably, the top nozzles 14a and 14b are manufactured from plastic by means of injection moulding, for example, whereby their weight is relatively small. The structure according to Figure 6 produces a relatively narrow air curtain that extends quite far from the air distribution devices 13a and 13b. Thus, an extremely good drying result is achieved. Furthermore, thanks to the narrow air curtain, the air distribution devices 13a and 13b may be arranged close to each other without the airflows blown thereby being mixed together, thus impairing the final result. Accordingly, although the air distribution devices 13a and 13b are quite close to each other, a separate flow can be blown with both of them, whereby the vehicle 1 can be dried with two successive, adjacent airflows.

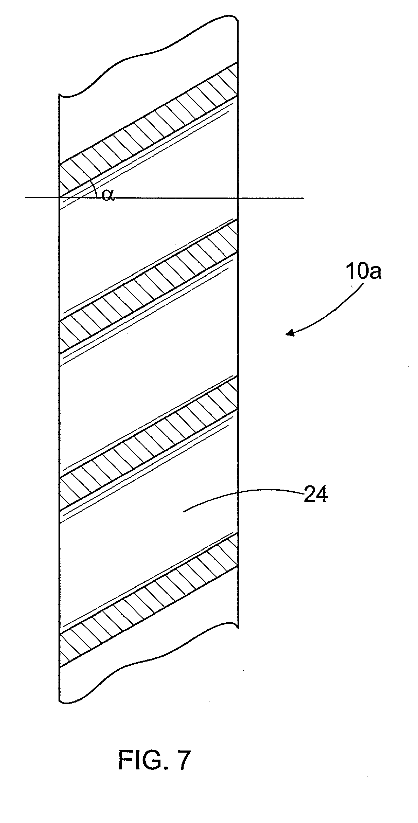

Figure 7 shows a detail of the side nozzle 10a. The structure of the side nozzle 10b is similar. The openings 24 of the side nozzles 10a and 10b may be slightly larger than the openings 23 of the top nozzles 14a and 14b. For example, if the diameters of the openings 23 of the top nozzles 14a and 14b are about 18 mm, the diameters of the openings 24 of the side nozzles 10a and 10b may be about 27 mm. The openings of the side nozzles 10a and 10b are arranged to slope downwards in such manner that the angle of bevel α thereof, i.e. deviation from the horizontal level, is more than 20°. The angle of bevel α is preferably about 30°. The angle of bevel α may vary between 20° and 60°, for example. Thanks to the sloping position, the openings 24 of the side nozzles 10a and 10b guide the airflow to be directed to the side wall of the vehicle 1 in such a manner that moisture and water drops in the vehicle flow downwards along the surfaces of the side walls thereof, allowing the drying to be implemented extremely efficiently.

In some cases, the features brought forward in this application can be employed as such, irrespective of other features. On the other hand, the features presented in the present application may be combined, if need be, to compose various combinations.

The drawings and the related description are only intended to illustrate the idea of the invention. The details of the invention may vary within the scope of the claims.

## Claims

1. A vehicle-drying apparatus comprising at least two top nozzle devices (11 a, 11 b) for drying the vehicle, each top nozzle device (11 a, 11 b) comprising an air distribution device (13a, 13b), a blower (12a, 12b) and a top nozzle (14a, 14b), the at least two top nozzle devices (11 a, 11b) being arranged as a single unit in such a manner that the at least two top nozzle devices (11 a, 11 b) are movable with one lifting means (16), **characterized in that** the at least two air distribution devices (13a, 13b) being arranged perpendicularly to the travel direction of the vehicle, the air distribution devices (13a, 13b) being arranged to form separate airflows successive and adjacent in the travel direction of the vehicle without the air flows being mixed together.

2. A drying apparatus as claimed in claim 1, **characterized in that** the top nozzle devices (11a, 11b) are arranged close to each other in such a manner that the distance between the midpoints of top nozzles (14a, 14b) in the top nozzle devices (11a, 11b) is less than 500 mm.

3. A drying apparatus as claimed in claim 1 or 2, **characterized in that** the top nozzle devices (11 a, 11 b) comprise turning devices for turning the blowing direction of the top nozzles (14a, 14b).

4. A drying apparatus as claimed in any one of the preceding claims, **characterized in that** the top nozzles (14a, 14b) of the top nozzle devices (11a, 11b) are arranged to comprise elongated openings (23).

5. A method of drying vehicles, the method comprising the steps of providing at least two top nozzle devices (11 a, 11 b), each top nozzle device (11 a, 11b) comprising an air distribution device (13a, 13b), a blower (12a, 12b) and a top nozzle (14a, 14b),
moving the at least two top nozzles devices (11 a, 11 b) with one lifting means (16), **characterized in that** the method further comprises the steps of
arranging the air distribution devices (13a, 13b) perpendicularly to the travel direction of the vehicle,
forming by the air distribution devices (13a, 13b) separate air flows successive and adjacent in the travel direction of the vehicle without the air flows being mixed together, and
drying the vehicle with the separate air flows successive and adjacent in the travel direction of the vehicle.

6. A method as claimed in claim 5, **characterized by** arranging the top nozzle devices (11a, 11b) close to each other in such manner that the distance between the midpoints of top nozzles (14a, 14b) in the top nozzle devices (11a, 11b) is less than 500 mm.

7. A method as claimed in claim 5 or 6, **characterized by** turning the blowing direction of the top nozzles (14a, 14b) of the top nozzle devices (11a, 11b) during the drying.

8. A method as claimed in any one of claims 5 to 7, **characterized by** providing the top nozzles (14a, 14b) of the top nozzle devices (11a, 11 b) with elongated openings (23).

## Patentansprüche

1. Fahrzeug-Trockenvorrichtung mit zumindest zwei oberen Düseneinrichtungen (11a, 11 b) zum Trocknen des Fahrzeugs, wobei jede obere Düseneinrichtung (11a, 11 b) ein Luftverteilergerät (13a, 13b), ein Gebläse (12a, 12b) und eine obere Düse (14a, 14b) aufweist, welche zumindest zwei oberen Düseneinrichtungen (11a, 11 b) als eine Einheit derart angeordnet sind, dass die zumindest zwei oberen Düseneinrichtungen (11 a, 11 b) mit einem Hebemittel (16) bewegbar sind, **dadurch gekennzeichnet, dass** die zumindest zwei Luftverteilergeräte (13a, 13b) senkrecht zur Fahrtrichtung des Fahrzeugs angeordnet sind, welche Luftverteilergeräte (13a, 13b) angeordnet sind, separate Luftströme nacheinander und nebeneinander in der Fahrtrichtung des Fahrzeugs auszubilden, ohne dass die Luftströme miteinander vermischt werden.

2. Trockenvorrichtung nach Patentanspruch 1, **dadurch gekennzeichnet, dass** die oberen Düseneinrichtungen (11 a, 11 b) nahe beieinander derart angeordnet sind, dass der Abstand zwischen den Mittelpunkten von oberen Düsen (14a, 14b) in den oberen Düseneinrichtungen (11a, 11b) weniger als 500 mm beträgt.

3. Trockenvorrichtung nach Patentanspruch 1 oder 2, dadurch g e - **kennzeichnet,** dass die oberen Düseneinrichtungen (11 a, 11 b) Wendevorrichtungen zum Wenden der Blasrichtung der oberen Düsen (14a, 14b) aufweisen.

4. Trockenvorrichtung nach einem der vorhergehenden Patentansprüche, **dadurch gekennzeichnet, dass** die oberen Düsen (14a, 14b) der oberen Düseneinrichtungen (11a, 11 b) angeordnet sind, längliche Öffnungen (23) aufzuweisen.

5. Verfahren zum Trocknen von Fahrzeugen, welches Verfahren die Schritte aufweist, in denen
zumindest zwei obere Düseneinrichtungen (11a, 11 b) vorgesehen werden, wobei jede obere Düseneinrichtung (11a, 11 b) ein Luftverteilergerät (13a, 13b), ein Gebläse (12a, 12b) und eine obere Düse (14a, 14b) aufweist,
die zumindest zwei oberen Düseneinrichtungen (11a, 11 b) mit einem Hebemittel (16) bewegt werden, **dadurch gekennzeichnet, dass** das Verfahren weiterhin die Schritte aufweist, in denen
die Luftverteilergeräte (13a, 13b) senkrecht zur Fahrtrichtung des Fahrzeugs angeordnet werden,
separate Luftströme nacheinander und nebeneinander in der Fahrtrichtung des Fahrzeugs durch die Luftverteilergeräte (13a, 13b) ausgebildet werden, ohne dass die Luftströme miteinander vermischt werden, und
das Fahrzeug mit den separaten Luftströmen nacheinander und nebeneinander in der Fahrtrichtung des Fahrzeugs getrocknet wird.

6. Verfahren nach Patentanspruch 5, dadurch **gekennzeich**n e t , dass die oberen Düseneinrichtungen (11 a, 11 b) nahe beieinander derart angeordnet werden, dass der Abstand zwischen den Mittelpunkten von oberen Düsen (14a, 14b) in den oberen Düseneinrichtungen (11a, 11 b) weniger als 500 mm beträgt.

7. Verfahren nach Patentanspruch 5 oder 6, **dadurch gekennzeichnet, dass** die Blasrichtung der oberen Düsen (14a, 14b) der oberen Düseneinrichtungen (11 a, 11 b) während des Trocknens gewendet wird.

8. Verfahren nach einem der Patentansprüche 5 bis 7, **dadurch gekennzeichnet, dass** die oberen Düsen (14a, 14b) der oberen Düseneinrichtungen (11a, 11b) mit länglichen Öffnungen (23) versehen werden.

## Revendications

1. Appareil de séchage pour véhicule comprenant au moins deux dispositifs (11a, 11 b) formant des buses supérieures pour sécher le véhicule, chaque dispositif (11a, 11 b) formant une buse supérieure comprenant un dispositif (13a, 13b) de distribution d'air, un ventilateur (12a, 12b) et une buse supérieure (14a, 14b),
les au moins deux dispositifs (11a, 11 b) formant des buses supérieures étant disposés en tant qu'unité unique de telle sorte que les au moins deux dispositifs (11 a, 11 b) formant des buses supérieures soient mobiles par un moyen de levage (16), **caractérisé en ce que**
les au moins deux dispositifs (13a, 13b) de distribution d'air sont disposés perpendiculairement à la direction de déplacement du véhicule, les dispositifs (13a, 13b) de distribution d'air étant agencés pour former des flux d'air séparés successifs et adjacents dans la direction du déplacement du véhicule sans que les flux d'air soient mélangés l'un avec l'autre.

2. Appareil de séchage selon la revendication 1, **caractérisé en ce que** les dispositifs (11 a, 11 b) formant des buses supérieures sont disposés près l'un de l'autre, de telle sorte que la distance entre les points médians de buses supérieures (14a, 14b) dans les dispositifs (11a, 11b) formant des buses supérieures est inférieure à 500 mm.

3. Appareil de séchage selon la revendication 1 ou la revendication 2, **caractérisé en ce que** les dispositifs (11a, 11 b) formant des buses supérieures comprennent des dispositifs rotatifs pour faire tourner la direction de soufflage des buses supérieures (14a, 14b).

4. Appareil de séchage selon l'une quelconque des revendications précédentes, **caractérisé en ce que** les buses supérieures (14a, 14b) des dispositifs (11a, 11 b) formant des buses supérieures sont agencées de façon à présenter des ouvertures allongées (23).

5. Procédé de séchage de véhicules, le procédé comprenant les étapes consistant à
prévoir au moins deux dispositifs (11a, 11 b) formant des buses supérieures, chaque dispositif (11a, 11 b) formant une buse supérieure comprenant un dispositif de distribution d'air (13a, 13b,), un ventilateur (12a, 12b) et une buse supérieure (14a, 14b,),
déplacer les au moins deux dispositifs (11a, 11 b) formant des buses supérieures avec un moyen de levage (16), **caractérisé en ce que** le procédé comprend en outre les étapes consistant à
agencer les dispositifs (13a, 13b) de distribution d'air perpendiculairement à la direction de déplacement du véhicule ;
former, au moyen des dispositifs (13a, 13b) de distribution d'air, des flux d'air séparés, successifs et adjacents dans la direction du déplacement du véhicule sans que les flux d'air soient mélangés l'un avec l'autre ;
et
sécher le véhicule avec les flux d'air séparés, successifs et adjacents dans la direction du déplacement du véhicule.

6. Procédé selon la revendication 5, **caractérisé par** le fait d'agencer les dispositifs (11a, 11 b) formant des buses supérieures près de l'un de l'autre de telle sorte que la distance entre les points médians des buses supérieures (14a, 14b) dans les dispositifs (11a, 11 b) formant des buses supérieures est inférieure à 500 mm.

7. Procédé selon la revendication 5 ou la revendication 6, **caractérisé par** le fait de faire tourner la direction de soufflage des buses supérieures (14a, 14b) des dispositifs (11a, 11b) formant des buses supérieures au cours du séchage.

8. Procédé tel que revendiqué dans l'une quelconque des revendications 5 à 7, **caractérisé par** le fait de prévoir les buses supérieures (14a, 14b) des dispositifs (11a, 11b) formant des buses supérieures avec des ouvertures allongées (23).
